# EUROPEAN PATENT SPECIFICATION

(11) **EP 0 958 165 B1**
(45) Date of publication and mention of the grant of the patent: **14.08.2002**
(21) Application number: 97948073.8
(22) Date of filing: 04.12.1997
(51) Int. Cl.: B62D 1/11

(54) **VEHICLE STEERING WHEEL**
LENKRAD FÜR FAHRZEUG
VOLANT DE VEHICULE

(30) Priority: 10.02.1997 SE 9700463
(43) Date of publication of application: 24.11.1999
(73) Proprietor: Volvo Personvagnar AB, 405 08 Göteborg (SE)
(72) Inventor: FOSSE, Tore, S-416 62 Göteborg (SE)
(74) Representative: Andersson, Per Rune
(86) International application number: SE9702023
(87) International publication number: WO9834826

(56) References cited:
- US-A- 3 507 164
- US-A- 3 507 165
- US-A- 4 920 821

## Description

### TECHNICAL FIELD:

The present invention relates to a vehicle steering wheel in accordance with the preamble of appended claim 1. The invention is particularly intended to constitute a part of an energy-absorbing steering mechanism for a motor vehicle.

### BACKGROUND OF THE INVENTION:

A conventional vehicle steering wheel normally comprises a hub which is fixed to the upper part of the vehicle main shaft and a number of spokes which are mounted on the hub. The spokes connect the hub with the rim of the steering wheel, i.e. the steering wheel ring itself. According to today's technology, the hub is normally cast in aluminium. The spokes are constituted by flat bar steel or round steel and are cast into the hub. The rim is made of round steel and is, in turn, cast integral with the spokes.

Furthermore, as regards present-day vehicles, it is desirable that the vehicle steering mechanism is designed in such a way that it obtains energy-absorbing characteristics. The reason for this is principally that it is required that a driver has a certain degree of protection if he/she is thrown against the steering wheel in the event of a collision, even if he/she is not using the seat belt. Moreover, this requirement regarding the energy-absorption of the steering wheel also applies when the driver is wearing the seat belt. In the latter case, it must be taken into consideration that the driver in some driving situations actually may hit the steering wheel in connection with a collision, even if he/she is fastened by means of the seat belt. This may occur if, for example, the driver has the seat situated so that it protrudes very far or if the seat belt has an exceptionally large slack.

Thus, demands are made for the steering mechanism to be designed in such a way that it absorbs energy in connection with a possible collision. According to known technique, this energy-absorption may be provided by means of the steering wheel being designed with deformable and non-rigid spokes. This results in that the lower part of the rim, i.e. the part that is closest to the drivers chest, can yield and deflect downwards when it is hit by the driver in the event of a collision. During this deflection, energy is absorbed.

One drawback as regards such a known construction is, however, that it will not provide the effect intended if a collision occurs when the steering wheel has been turned, for example, half a turn, which is the case during cornering. In this case-, the non-rigid and energy-absorbing spokes will be situated in a position in relation to the driver which is not optimal as regards the energy-absorption, which may result in that the desired function does not occur.

A previously known energy-absorbing vehicle steering wheel comprising the features defined in the preamble of claim 1 is shown in the DE Patent 3 702 847. This steering wheel comprises two spokes which are mounted in an annular part which is arranged around the vehicle main shaft. The annular part is, in turn, connected with the main shaft via a connection element which is made of a plastic, deformable steel or aluminium material. The connection element comprises a number of arms which extend radially outwards from the main shaft and towards the annular part. In the event of a possible strain, the arms will be deformed, which may be utilized for energy-absorption in the event of a collision.

Furthermore, an energy-absorbing steering wheel construction is shown in the FR Patent 2 656 582, said construction being provided with spokes that are connected with an energy-absorbing, tubular element which is arranged as an extension of the longitudinal axis of the main shaft. The tubular element is, in turn, constructed of two tubular sections having different diameters and being connected with each other. During a strain in the event of a collision, the tubular element will be deformed in such a way that the two sections deflect in relation to each other. This deformation occurs during energy-absorption.

Regardless of the fact that these known arrangements provide the desired energy-absorbing characteristics, said arrangements suffer from a drawback in that they have a relatively complex structure, which results in high manufacturing costs. Furthermore, it is desirable nowadays that steering wheel constructions are manufactured which, for example, are optimized as regards their natural frequency, which, in turn, may reduce the vibrations in the steering wheel.

An other energy-absorbing steering wheel is shown in the US Patent 4 920 821, said steering wheel comprising a hub, an energy absorbing portion and a spoke which are integrally constructed in one single material piece.

### SUMMARY OF THE INVENTION:

The object of the present invention is provide an improved vehicle steering wheel which permits an effective energy-absorption in the event of a collision. An additional object is to provide a vehicle steering wheel which is simple and cost-effective to manufacture. An additional object is to provide a vehicle steering wheel having a light weight and a relatively high natural frequency. The above-mentioned objects are accomplished by means of a vehicle steering wheel, the characterizing features of which will be apparent from appended claim 1.

The vehicle steering wheel according to the invention comprises a hub for mounting in a main shaft, a cup-shaped element which is connected with the hub, and at least one spoke which connects said cup-shaped element with a rim. According to the invention, the hub, the cup-shaped element and the spoke are integrally constructed in one single material piece. By means of the invention, it is permitted to, for example, cast the whole steering wheel in one single piece. In this manner, a simplified manufacturing is provided having fewer manufacturing steps than the known arrangements. This, in turn, results in a cheaper manufacturing. Furthermore, the steering wheel is constructed in accordance with shell principles, which provides a solid steering wheel which also may be provided with advantageous characteristics as regards its natural frequency.

By means of a steering wheel according to the invention, a uniform, i.e. symmetrical, energy-absorption can be obtained. This, in turn, results in that the vehicle driver obtains the same protection irrespective of how much the steering wheel has been turned in the collision moment. This is conducive to a more optimal energy-absorbing capacity of the steering wheel according to the invention.

According to a certain embodiment, the above-mentioned cup-shaped element is formed in such a way that it accommodates an airbag in the hub of the steering wheel.

Other advantageous embodiments of the invention will be apparent from the appended dependent claims.

### BRIEF DESCRIPTION OF THE DRAWINGS:

The invention will be further described in the following with reference to a preferred embodiment and to the annexed drawings, in which
Fig. 1 shows a perspective view of a vehicle steering wheel according to the invention, and
Fig. 2 shows a side view of said vehicle steering wheel, along its symmetry axis.

### PREFERRED EMBODIMENT:

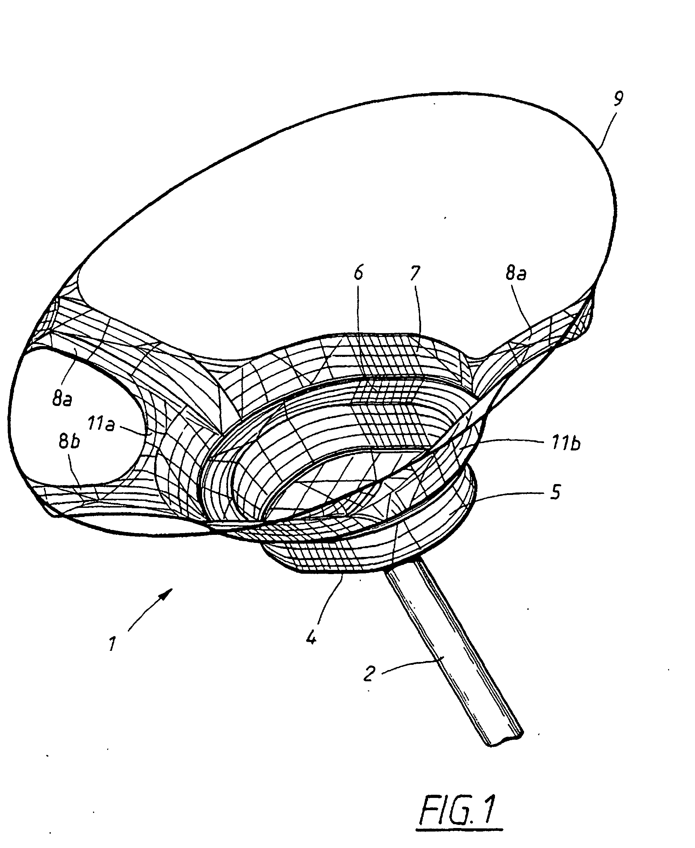

The invention is particularly intended to be used in connection with vehicles and provides an improved steering wheel structure with energy-absorption in the event of a possible collision. Fig. 1 shows the principle design for a vehicle steering wheel 1 according to the invention. According to a preferred embodiment, the steering wheel 1 is arranged in connection with a steering mechanism in a vehicle, more precisely so that the steering wheel is fixed to a main shaft 2. It should be noted that Fig. 1 only shows the framework for the steering wheel 1, and that said steering wheel conventionally is intended to be covered with stuffing material and upholstery.

The steering wheel 1 is constructed of an essentially cup-shaped and shell-like element, in the bottom part of which a hole is made where the main shaft 2 is mounted. Thus, the bottom part of the shell constitutes a hub 4 for the steering wheel 1. The shell can be constructed by means of casting of, for example, steel or aluminium, but is also suitable to be made of, for example, composite material. The shell can also be constructed by means of so-called hydro-forming, which is a per se previously known method in which water is utilized during moulding of the shell.

As is apparent from the drawing, the shape of the hub 4 is essentially oval, seen from above. The shape of the hub 4 is adjusted according to requirements regarding the final design of the steering wheel 1 and may of course also be, for example, circular.

The shell is designed in such a way that the hub 4 transforms into a lower shell part 5 having its extension around the imaginary longitudinal axis of the main shaft 2. Furthermore, the lower shell part 5 transforms into a shelf 6 having its radial extension in relation to said axis. The shelf 6, in turn, transforms into an upper shell part 7. In this manner, a shell structure is formed in which the upper shell part 7 has larger external dimensions than the lower shell part 6. As will be explained in detail below, the dimensions of the shell parts 6, 7 are accurately selected in order to provide the steering wheel 1 with its desired characteristics as regards, for example, energy-absorption, natural frequency, resistance and weight. Also, the shell parts 6,7 form a cup-shaped element which preferably may accommodate an airbag (not shown).

The upper shell part 7 transforms in certain places into a number of spoke-like elements. The number of spokes may vary, but according to the embodiment, the steering wheel 1 comprises four such spokes which are distributed along the periphery of the shell, more precisely two upper spokes 8a and two lower spokes 8b. The lower spokes 8b are the spokes which are positioned closest to the vehicle driver. The spokes 8a, 8b, in turn, transform into the steering wheel rim 9, which conventionally is essentially circular. The rim 9 is preferably formed as a tube or a solid ring. During manufacture of the steering wheel 1, the whole shell, including the spokes 8a, 8b and the rim 9, may be cast in one single piece. Alternatively, the rim 9 may be attached to the spokes 8a, 8b by means of the rim being cast integral with the spokes, as in conventional casting technique.

Although the term "spoke" has been used in this context, it is a fact that these elements constitute an integrated part of the shell, more specifically a part which protrudes from the upper shell part 7. Thus, the spokes 8a, 8b do not constitute separate details which are mounted on the shell.

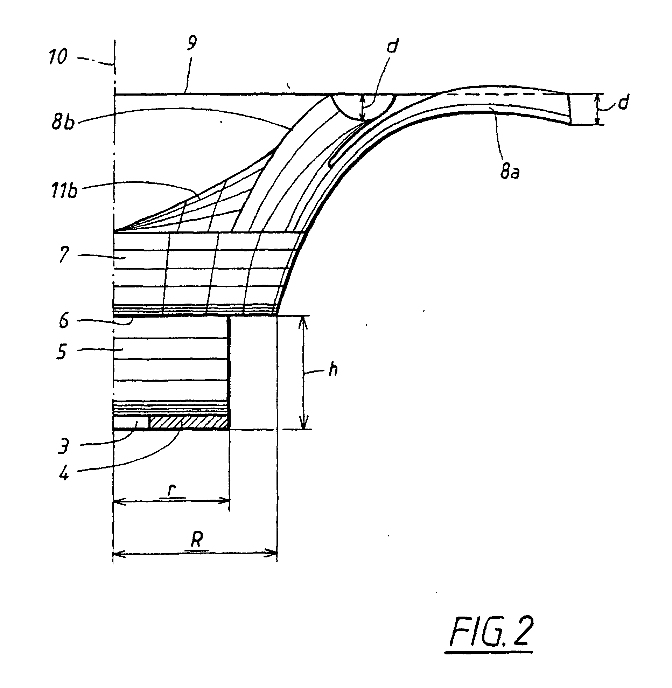

Fig. 2 shows a side view of half the steering wheel 1, wherein a plane 10 extends along the symmetry axis through the steering wheel 1 which runs in the longitudinal direction of the vehicle. The drawing illustrates the most important parameters that are taken into consideration when the steering wheel 1 according to the invention is dimensioned. On the supposition that the hub 4 is circular, it is apparent from the drawing that the hub 4 has a certain radius r, measured from the centre of the hole 3 which is intended for the mounting of the main shaft (not shown in Fig. 2). Moreover, the lower shell part 5 has a certain height h, i.e. measured from the hub 4 and up to the shelf 6. Furthermore, the upper shell part 7 has a certain radius R at its lower edge, measured from the centre of the hole 3.

As is apparent from Fig. 2, the spokes 8a, 8b are slightly curved in their extension from the upper shell part 6 to the rim 9. Furthermore, each of the spokes 8a, 8b has a cross-section that is cup-shaped or curved, i.e. a cross-section that is essentially U-shaped along its extension from the rim 9 to the upper shell part 7. The shape of this cross-section may be defined by means of the depth d of the respective spoke 8a, 8b. The depth d may also vary along the extension of the respective spoke 8a, 8b. By means of suitable design of the geometry and the thickness of the shell parts 5, 7 and the spokes 8a, 8b, a steering wheel construction is obtained in which the spokes 8a, 8b are very rigid. During a strain in the event of a collision, the steering wheel 1 will be deformed at the shelf 6, which results in the upper shell part 7 deflecting in relation to the lower shell part 5. During such strain, the spokes 8a, 8b will be deformed very little.

The steering wheel 1 may be provided with a uniform energy-absorption, i.e. so that the energy-absorption of the steering wheel 1 obtains a similar course regardless of whether the steering wheel 1 has been turned, which may be the case if a collision occurs during cornering. This uniform energy-absorption is in particular obtained if the hub 4 is provided with an essentially circular shape, seen from above.

As is apparent from Figs. 1 and 2, the steering wheel 1 comprises reinforcements 11a, 11b which extend between each of the upper spokes 8a and the lower spokes 8b. The reinforcements 11a, 11b constitute integrated parts of the shell, more specifically in the shape of extensions of the upper shell part 6.

During manufacture of the steering wheel according to the invention, the starting-point is a purely cone-shaped component which is tapered in the direction towards the main shaft 2. This component is modified in order to be adjusted to, on the one hand, the desired design of the completed steering wheel 1 and, on the other hand, its desired characteristics. According to the invention, the steering wheel 1 may be dimensioned in order to obtain a highest possible lowest natural frequency, while the weight of the completed steering wheel 1 is minimized. By means of an accurate balancing of the dimensions of the steering wheel 1, a lowest natural frequency is obtained which exceeds a relatively high minimum value, which, for example, may be set to 60 Hz. In this manner, a safe margin is obtained to the frequency at which interferences occur, which, for example, may be 40 Hz. Due to the fact that the natural frequency of the steering wheel 1 according to the invention does not interact with such interferences, very low vibrations occur in the steering wheel 1 when the vehicle is running.

The fact that the rim 9 of the steering wheel 1 subsequently is covered with upholstery, for example in the form of foam, also affects the natural frequency of the completed steering wheel 1. In fact, when the steering wheel foam is mounted on the steering wheel, the natural frequency is reduced, which, in turn, is due to the fact that the total mass of the steering wheel 1 increases. Furthermore, the rim 9 is the one part which affects the natural frequency the most, which is due to the fact that this part may be regarded as a mass and the shell parts 5, 7 may be regarded as a spring having a certain rigidity. During selection of the dimensions of the steering wheel 1, knowledge is utilized regarding the fact that the natural frequency of a ring having a certain mass, material and dimensions may be calculated from known formulas, wherein the natural frequency of the ring is proportional to (m)^{½}, where m is the mass of the ring. Consequently, when the steering wheel foam is added, a light rim 9 will be more affected than a heavier rim, due to the fact that the total mass, when calculated as a percentage, increases more for the light rim than for the heavier rim. The natural frequency is also affected by the rim material, i.e. depending upon if a rim 9 made of steel or aluminium is selected.

Furthermore, when the steering wheel 1 is to be dimensioned, it is necessary to consider requirements regarding torsional strength, static resistance, collision forces and weight. For example, there might be a requirement for the deformation not to exceed a certain limit value when a maximum load is applied somewhere along the rim 9 (and which corresponds to what a person might need in order to pull him-/herself into or out of the car by means of the steering wheel). Also, as regards the torsional strength of the steering wheel 1, there are normally requirements which state that the steering wheel 1 must be capable of a certain limit value for the torsional moment, which corresponds to the fact that it is impossible to turn the steering wheel 1 until it breaks during a possible attempt to steal the vehicle.

By means of the steering wheel 1 according to the invention, the requirements regarding resistance may also be fulfilled, by balancing the choice of the material and the dimensions of the parts forming part of the steering wheel 1.

The invention is not limited to the embodiments which are described above and shown in the illustrations, but may be varied within the scope of the appended claims. For example, the steering wheel 1 may be utilized in connection with various types of vehicles, for example passenger cars and heavy-goods vehicles. Furthermore, the number of spokes may vary. Finally, the steering wheel can be made of several different materials, for example steel, aluminium, magnesium, titanium or composite material.

## Claims

1. Vehicle steering wheel (1), comprising a hub (4) for mounting in a main shaft (2), a cup-shaped element (5, 6, 7) which is connected with the hub (4), and at least one spoke (8) which connects said cup-shaped element (5, 6, 7) with a rim (9), **characterized in that** said hub (4), said cup-shaped element (5, 6, 7) and said spoke (8) are integrally constructed in one single material piece, wherein said cup-shaped element (5, 6, 7) is dimensioned so as to accommodate an airbag and wherein said spoke (9) is formed as an essentially curve-shaped protrusion of said cup-shaped element (5, 6, 7) which extends to said rim (9) in a radial direction away from said main shaft (2).

2. Vehicle steering wheel (1) according to claim 1,
**characterized in that** said cup-shaped element (5, 6, 7) is essentially cone-shaped and comprises a lower shell part (5) and an upper shell part (7), wherein the upper shell part (7) has larger external dimensions than the lower shell part (5) and wherein the shell parts (5, 7) are connected with a shelf (6) having its extension in an essentially radial direction in relation to the longitudinal extension of the main shaft (2).

3. Vehicle steering wheel (1) according to claim 1 or 2,
**characterized in that** said spoke (8) has an essentially U-shaped cross-section.

4. Vehicle steering wheel (1) according to any one of the preceding claims, **characterized in that** it comprises at least two spokes (8a, 9b) which are concatenated by means of a reinforcing element (11) which constitutes an extension of, and an integrated part of said cup-shaped element (5, 6, 7).

5. Vehicle steering wheel (1) according to any one of claims 2-4, **characterized in that** its dimensions (r, R, h, d) for the hub (4), the shell parts (5, 7) and the spoke (8) are selected in such a way that a lowest natural frequency of the steering wheel (1) is obtained, said frequency exceeding a limit value which exceeds the frequency of expected interferences which affect the steering wheel (1).

6. Vehicle steering wheel (1) according to any one of the preceding claims, **characterized in that** said hub (4), said cup-shaped element (5, 6, 7) and said spoke (8) are made of aluminium or steel.

7. Vehicle steering wheel (1) according to any one of the preceding claims, **characterized in that** it comprises a rim (9) which is integrally constructed with said at least one spoke (8).

8. Vehicle steering wheel (1) according to any one of the preceding claims, **characterized in that** it is constructed into an integrated unit by means of casting,

## Patentansprüche

1. Fahrzeuglenkrad (1) mit einer Nabe (4) zum Einbauen einer Hauptwelle (2), einem tassenförmigen Element (5, 6, 7), das mit der Nabe (4) verbunden ist, und mit wenigstens einer Speiche (8), die das tassenförmige Element (5, 6, 7) mit einem nach außen umgebogenen Rand (9) verbindet,
**dadurch gekennzeichnet,**
**dass** die Nabe (4), das tassenförmige Element (5, 6, 7) und die Speiche (8) einstückig in einem einzigen Materialteil konstruiert sind, wobei das tassenförmige Element (5, 6, 7) zur Aufnahme eines Airbags dimensioniert ist und wobei die Speiche (8) als ein im wesentlichen kurvenförmiger Vorsprung des tassenförmigen Elements (5, 6, 7) gebildet ist, der sich zu dem nach außen umgebogenen Rand (9) in einer radialen Richtung von der Hauptwelle (2) weg erstreckt.

2. Fahrzeuglenkrad (1) nach Anspruch 1,
**dadurch gekennzeichnet,**
**dass** das tassenförmige Element (5, 6, 7) im wesentlichen kugelförmig gestaltet ist und einen unteren Mantelabschnitt (5) und einen oberen Mantelabschnitt (7) aufweist, wobei der obere Mantelabschnitt (7) größere Außenabmessungen als der untere Mantelabschnitt (5) besitzt, und wobei die Mantelabschnitte (5, 6) mit einer Platte (6) verbunden sind, die sich in einer im wesentlichen radialen Richtung bezüglich der Längsausdehnung der Hauptwelle (2) erstreckt.

3. Fahrzeuglenkrad (1) nach Anspruch 1 oder 2,
**dadurch gekennzeichnet,**
**dass** die Speiche (8) einen im wesentlichen U-förmigen Querschnitt aufweist.

4. Fahrzeuglenkrad (1) nach einem der vorangehenden Ansprüche,
**dadurch gekennzeichnet,**
**dass** es wenigstens zwei Speichen (9a, 9b) aufweist, die mittels eines Versteifungselements (11) verknüpft sind, das eine Verlängerung und einen einstückigen Abschnitt des tassenförmigen Elements (5, 6, 7) bildet.

5. Fahrzeuglenkrad (1) nach einem der Ansprüche 2 bis 4,
**dadurch gekennzeichnet,**
**dass** seine Abmessung (r, R, h, d) für die Nabe (4), die Mantelabschnitte (5, 7) und die Nabe derart ausgewählt sind, dass die niedrigste Eigenfrequenz des Lenkrads (1) erreicht ist, wobei die Frequenz einen Grenzwert übersteigt, der die Frequenz der Störungen übersteigt, die an das Lenkrad (1) angreifen.

6. Fahrzeuglenkrad (1) nach einem der vorangehenden Ansprüche,
**dadurch gekennzeichnet,**
**dass** die Nabe (4), das tassenförmige Element (5, 6, 7) und die Speiche aus Aluminium oder Stahl hergestellt sind.

7. Fahrzeuglenkrad (1) nach einem der vorangehenden Ansprüche,
**dadurch gekennzeichnet,**
**dass** es einen nach außen umgebogenen Rand (9) aufweist, der einstückig mit wenigstens der einen Speiche (8) aufgebaut ist.

8. Fahrzeuglenkrad (1) nach einem der vorangehenden Ansprüche,
**dadurch gekennzeichnet,**
**dass** es als einstückige Gusseinheit aufgebaut ist.

## Revendications

1. Volant de direction (1) pour véhicule comportant un moyeu (4) destiné à être monté dans un arbre principal (2), un élément en forme de pot (5, 6, 7), qui est raccordé au moyeu (4), et au moins un rayon (8), qui raccorde ledit élément en forme de pot (5, 6, 7) à un rebord (9), **caractérisé en ce que** ledit moyeu (4), l'élément en forme de pot (5, 6, 7) et ledit rayon (8) sont réalisés d'un seul tenant dans un seul bloc de matière, ledit élément en forme de pot (5, 6, 7) étant dimensionné de manière à loger un airbag, et ledit rayon (9) étant agencé sous la forme d'une partie saillante de forme essentiellement courbe dudit élément en forme de pot (5, 6, 7) qui s'étend jusqu'audit rebord (9) dans une direction radiale à partir dudit arbre principal (2).

2. Volant de direction (1) de véhicule selon la revendication 1, **caractérisé en ce que** ledit élément en forme de pot (5, 6, 7) est agencé essentiellement avec une forme de cône et comprend une partie de coque inférieure (5) et une partie de coque supérieure (7), la partie de coque supérieure (7) possédant des dimensions externes plus grandes que la partie de coque inférieure (5), et les parties de coques (5, 7) étant raccordées à une coque étagée (6) essentiellement radiale par rapport à l'étendue longitudinale de l'arbre principal (2).

3. Volant de direction (1) de véhicule selon la revendication 1 ou 2, **caractérisé en ce que** ledit rayon (8) possède une section transversale essentiellement en forme de U.

4. Volant de direction (1) de véhicule selon l'une quelconque des revendications précédentes, **caractérisé en ce qu'**il comprend au moins deux rayons (8a, 8b), qui sont reliés au moyen d'un élément de renfort (11) qui constitue un prolongement ou fait partie intégrante dudit élément en forme de pot (5, 6, 7).

5. Volant de direction (1) de véhicule selon l'une quelconque des revendications 2 à 4, **caractérisé en ce que** ses dimensions (r, R, h, d) pour le moyeu (4), les parties de coques (5, 6, 7) et le rayon (8) sont choisies de manière à obtenir une fréquence naturelle la plus basse du volant de direction (1), ladite fréquence dépassant une valeur limite qui dépasse la fréquence d'interférences attendues qui affectent le volant de direction (1).

6. Volant de direction (1) de véhicule selon l'une quelconque des revendications précédentes, **caractérisé en ce que** ledit moyeu (4), ledit élément en forme de pot (5, 6, 7) et ledit rayon (8) sont formés d'aluminium ou d'acier.

7. Volant de direction (1) de véhicule selon l'une quelconque des revendications précédentes, **caractérisé en ce qu'**il comprend un rebord (9), qui est réalisé d'un seul tenant avec ledit au moins un rayon (8).

8. Volant de direction (1) de véhicule selon l'une quelconque des revendications précédentes, **caractérisé en ce qu'**il est constitué sous la forme d'une unité intégrée, par coulée.
